# EUROPEAN PATENT SPECIFICATION

(11) **EP 4 063 277 B1**
(45) Date of publication and mention of the grant of the patent: **17.07.2024**
(21) Application number: 22159063.1
(22) Date of filing: 28.02.2022
(51) Int. Cl.: B64D 45/00, B64F 5/60, F01D 21/00, G05B 23/02

(54) **COMPUTER-IMPLEMENTED METHODS FOR INDICATING DAMAGE TO AN AIRCRAFT**
COMPUTERIMPLEMENTIERTE VERFAHREN ZUR ANZEIGE VON SCHÄDEN AN EINEM FLUGZEUG
PROCÉDÉS MIS EN OEUVRE PAR ORDINATEUR POUR INDIQUER LES DOMMAGES CAUSÉS À UN AÉRONEF

(30) Priority: 26.03.2021 GB 202104306
(43) Date of publication of application: 28.09.2022
(73) Proprietor: Rolls-Royce plc, London N1 9FX (GB)
(72) Inventor: Beecroft, Peter, Derby, DE24 8BJ (GB); Loreti, Stefano, Derby, DE24 8BJ (GB); Shi, Dongfeng, Derby, DE24 8BJ (GB)
(74) Representative: Rolls-Royce plc

(56) References cited:
- EP-A1- 3 301 397
- EP-A1- 3 456 637
- EP-A1- 3 657 468
- US-A1- 2014 229 122
- US-A1- 2018 011 481

## Description

### TECHNOLOGICAL FIELD

The present disclosure concerns computer-implemented methods, apparatus, computer programs, and non-transitory computer readable mediums

### BACKGROUND

Aircraft, such as airliners, may incur damage during operation. A gas turbine engine of an aircraft may ingest a bird or debris during take-off or landing which causes internal damage to the gas turbine engine. For example, where an aircraft flies through a flock of birds, the fan and compressor systems of the gas turbine engine may be impacted and damaged by the birds. Similarly, debris on the runway may impact another part of the aircraft (such as a wing or a horizontal stabilizer) and cause damage to the aircraft. Such damage is usually referred to as 'foreign object damage' or 'FOD'. In other examples, an internal component of a gas turbine engine (such as a rotor blade) may become detached during operation and cause damage as the component travels through the gas path of the engine. Such damage is usually referred to as 'domestic object damage'. Currently, flight deck crew (such as the pilot and the co-pilot) receive a minimal amount of information when the aircraft incurs damage, and this may hinder their ability to take decisive and appropriate action during an emergency.

EP3657468 relates to an air transport system, operational methods, and associated aircraft which include a plug-in series hybrid-electric powertrain (specifically optimized for aircraft operating in regional ranges), a forward compatible, range-optimized aircraft design, for enabling electric-based air travel services as the overall transportation system and associated technologies, and platforms for the semi-automated optimization and control of the powertrain, and for the semi-automated optimization of determining the flight path for a regional distance hybrid-electric aircraft flight. There is provided a powertrain for an aircraft, comprising one or more energy storage units, a distribution bus coupled to the at least one energy storage unit and optionally coupled to at least one range extending generator; and one or more electric propulsors coupled to the distribution bus to deliver thrust using electricity drawn from the distribution bus.

EP3301397 relates to methods and apparatus for detecting surface deformation of aircraft surfaces. The apparatus includes a sensor system to monitor an aircraft surface, the sensor system including a first sensor and a second sensor. A surface monitoring system receives signals from the first sensor and the second sensor and based on the signals received, the surface monitoring system is to: detect a surface deformation on the aircraft surface; analyze one or more environmental conditions or aircraft parameters; and classify a severity of a detected surface deformation based on the one or more environmental conditions or aircraft parameters to determine if the detected surface deformation impacts aircraft performance or safety.

EP3456637 relates to a vehicle which includes a vehicle and a strain gauge. The vehicle includes a vehicle body component exposed to an exterior of the vehicle. The strain gauge is coupled with the vehicle body component.

US2014229122 relates to a method for predicting faults in an aircraft thrust reverser system, the method includes receiving a position signal, determining a variation in the position signal relative to a reference position, predicting a fault in the thrust reverser based on the variation, and providing an indication of the predicted fault.

US2018011481 relates to a device that may receive equipment information, associated with a first equipment, including information associated with anomalies identified based on operational information collected during operation of the first equipment, and messages generated during the operation of the first equipment. The device may receive maintenance information, associated with the first equipment, that identifies one or more part failures associated with one or more equipment parts. The device may identify associations between the one or more part failures and the first equipment information. The device may receive equipment information, associated with a second equipment, including information associated with anomalies identified based on operational information collected during operation of the second equipment, and messages generated during the operation of the second equipment. The device may generate and provide a prediction, associated with a future failure of an equipment part of the second equipment, based on the second equipment information and the associations.

### BRIEF SUMMARY

According to a first aspect there is provided a computer-implemented method as claimed in claim 1.

The data may indicate a location of the damage on the aircraft, and the step of controlling the output device may further comprise controlling the output device to provide the location of the damage.

The step of determining information to present to the operator may include determining the effect of damage on performance of the aircraft, and the step of controlling the output device may further comprise controlling the output device to provide the determined effect of the damage on the performance of the aircraft.

The computer-implemented method may further comprise: receiving a signal from a user input device; and in response to receiving the signal from the user input device, controlling the output device to provide additional information indicating the occurrence of damage to an operator of the aircraft, the additional information comprising a greater quantity of information than the determined information.

The output device may comprise a display.

According to a second aspect there is provided an apparatus as claimed in claim 6.

The data may indicate a location of the damage on the aircraft, and the controller may be configured to control the output device to provide the location of the damage.

The controller may be configured to determine the effect of damage on performance of the aircraft, and to control the output device to provide the determined effect of the damage on the performance of the aircraft.

The controller may be configured to: receive a signal from a user input device; and in response to receiving the signal from the user input device, control the output device to provide additional information indicating the occurrence of damage to an operator of the aircraft, the additional information comprising a greater quantity of information than the determined information.

The output device may comprise a display.

According to a third aspect there is provided a computer program according to claim 11.

According to a fourth aspect there is provided a non-transitory computer readable storage medium according to claim 12.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### BRIEF DESCRIPTION

Embodiments will now be described by way of example only, with reference to the Figures, in which:
Fig. 1 illustrates a schematic diagram of an aircraft according to various examples;
Fig. 2 illustrates a cross sectional side view diagram of a gas turbine engine according to various examples;
Fig. 3 illustrates a schematic diagram of an apparatus according to various examples;
Fig. 4 illustrates a flow diagram of a computer-implemented method for determining damage to an aircraft according to a first example;
Fig. 5 illustrates a flow diagram of a computer-implemented method for determining damage to an aircraft according to a second example;
Fig. 6 illustrates a flow diagram of a computer-implemented method for determining damage to an aircraft according to a third example; and
Fig. 7 illustrates a flow diagram of a computer-implemented method for indicating an occurrence of damage to an aircraft according to various examples.

### DETAILED DESCRIPTION

In the following description, the terms 'connected' and 'coupled' mean operationally connected and coupled. It should be appreciated that there may be any number of intervening components between the mentioned features, including no intervening components.

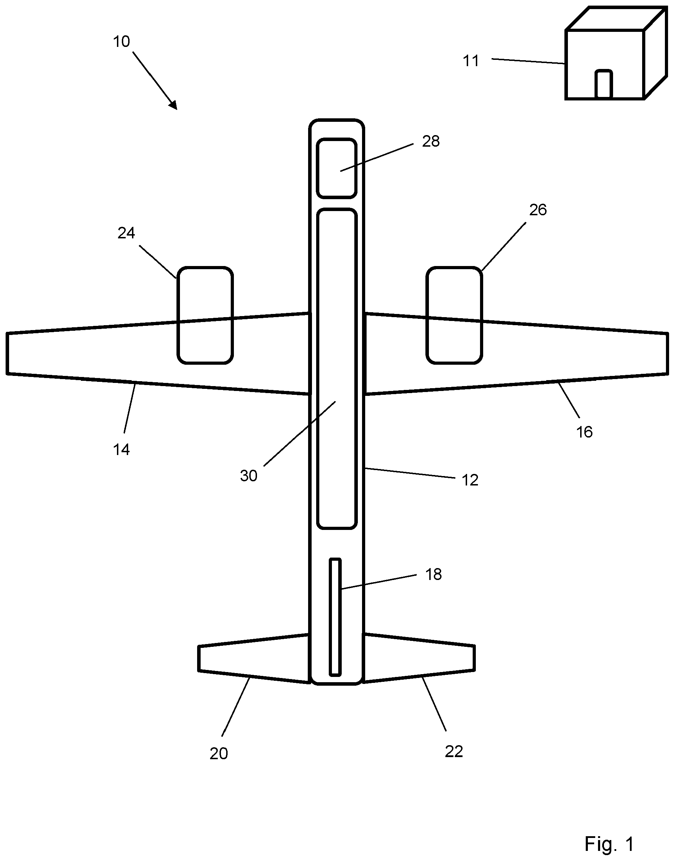

Fig. 1 illustrates a schematic diagram of an aircraft 10 including a fuselage 12, a first wing 14, a second wing 16, a vertical stabilizer 18, a first horizontal stabilizer 20, a second horizontal stabilizer 22, a first propulsor 24, and a second propulsor 26. The fuselage 12 includes a cockpit 28 and may additionally include a cabin 30. The first propulsor 24 is coupled to the first wing 14 and the second propulsor 26 is coupled to the second wing 16.

The first propulsor 24 may be a gas turbine engine, such as a turbo-fan engine, a turbo-jet engine or a turbo-prop engine. Similarly, the second propulsor 26 may be a gas turbine engine, such as a turbo-fan engine, a turbo-jet engine or a turbo-prop engine. In other examples, the first and second propulsors 24, 26 may each comprise an electrical motor coupled to a fan for providing propulsive thrust to the aircraft 10.

It should be appreciated that the aircraft 10 may have an alternative configuration to that illustrated in Fig. 1. For example, the aircraft 10 may include a plurality of propulsors coupled to the first wing 14 and a plurality of propulsors coupled to the second wing 16. By way of another example, one or more propulsors may be coupled to the fuselage 12 instead of the wings 14, 16. In other examples, the aircraft 10 may have a 'blended wing' configuration, a 'flying wing' configuration, or a `lifting body' configuration. In further examples, the aircraft 10 may be a rotorcraft such as helicopter, or a powered lift aircraft.

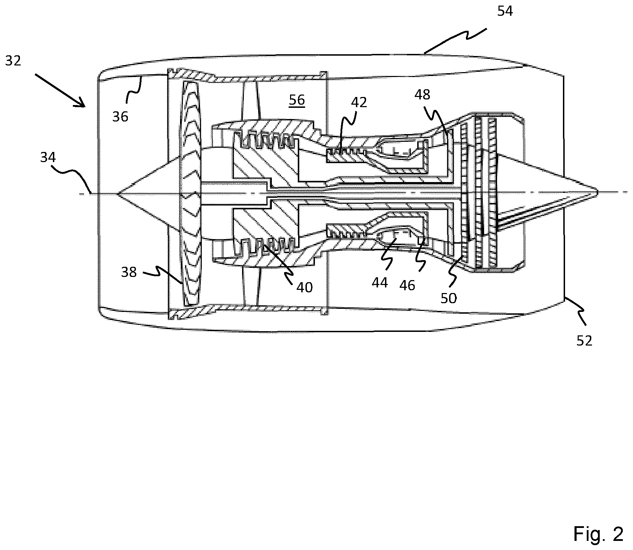

Fig. 2 illustrates an example of a gas turbine engine 32 which may be used as the first propulsor 24 and/or the second propulsor 26. The gas turbine engine 32 is a turbo-fan and has a principal and rotational axis 34. The engine 32 comprises, in axial flow series, an air intake 36, a propulsive fan 38, an intermediate pressure compressor 40, a high-pressure compressor 42, combustion equipment 44, a high-pressure turbine 46, an intermediate pressure turbine 48, a low-pressure turbine 50 and an exhaust nozzle 52. A nacelle 54 generally surrounds the gas turbine engine 32 and defines both the intake 36 and the exhaust nozzle 52.

In operation, air entering the intake 36 of the gas turbine engine 32 is accelerated by the fan 38 to produce two air flows: a first air flow into the intermediate pressure compressor 40 and a second air flow which passes through a bypass duct 56 to provide propulsive thrust. The intermediate pressure compressor 40 compresses the air flow directed into it before delivering that air to the high-pressure compressor 42 where further compression takes place.

The compressed air exhausted from the high-pressure compressor 42 is directed into the combustion equipment 44 where it is mixed with fuel and the mixture combusted. The resultant hot combustion products then expand through, and thereby drive the high, intermediate and low-pressure turbines 46, 48, 50 before being exhausted through the nozzle 52 to provide additional propulsive thrust. The high, intermediate and low-pressure turbines 46, 48, 50 drive respectively the high-pressure compressor 42, intermediate pressure compressor 40 and fan 38, each by suitable interconnecting shaft.

Other gas turbine engines to which the present disclosure may be applied may have alternative configurations. By way of example, such gas turbine engines may have an alternative number of interconnecting shafts (for example, two interconnecting shafts) and/or an alternative number of compressors and/or turbines. Furthermore, such gas turbine engines may comprise a gearbox provided in the drive train from a turbine to a compressor and/or fan.

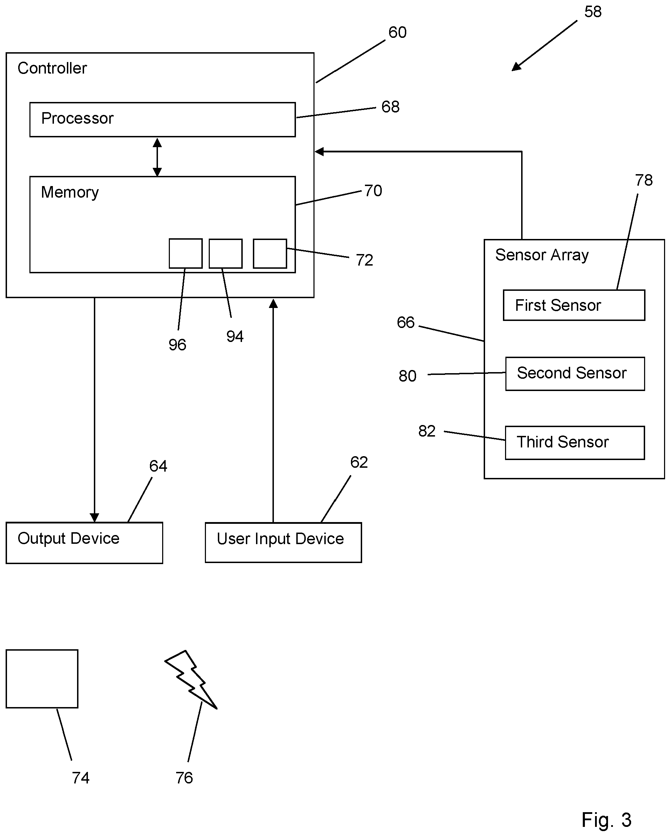

Fig. 3 illustrates a schematic diagram of an apparatus 58 according to various examples. The apparatus 58 includes a controller 60, a user input device 62, an output device 64 and a sensor array 66. In some examples, the apparatus 58 may be a module. As used herein, the wording `module' refers to a device or apparatus where one or more features are included at a later time and, possibly, by another manufacturer or by an end user. For example, where the apparatus 58 is a module, the apparatus 58 may only include the controller 60, and the remaining features may be added by another manufacturer, or by an end user.

The controller 60, the user input device 62, the output device 64 and the sensor array 66 may be coupled to one another via wireless links and may consequently comprise transceiver circuitry and one or more antennas. Additionally, or alternatively, the controller 60, the user input device 62, the output device 64 and the sensor array 66 may be coupled to one another via wired links and may consequently comprise interface circuitry (such as a Universal Serial Bus (USB) socket).

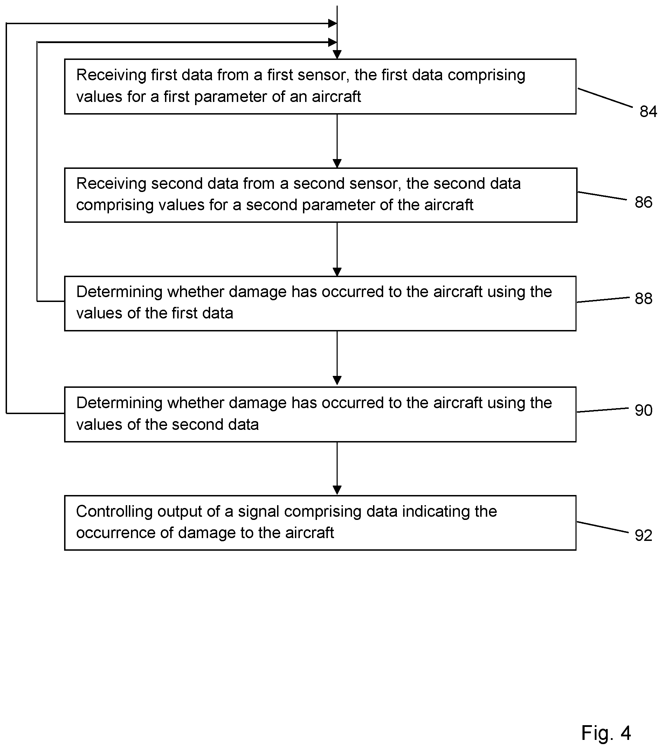

The controller 60 may comprise any suitable circuitry to cause performance of the methods described herein and as illustrated in Figs. 4, 5, 6 and 7. The controller 60 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

The controller 60 may be located on the first propulsor 24 and/or on the second propulsor 26. For example, the controller 60 may be a full authority digital engine controller (FADEC), an electronic engine controller (EEC) or an engine control unit (ECU). Alternatively, the controller 60 may be located in the fuselage 12 of the aircraft 10. In further examples, the controller 60 may be located remote from the aircraft 10 and may be located, for example, at a health monitoring facility 11 (as illustrated in Fig. 1) that is remote from aircraft 10. In some examples, the controller 60 may be distributed between the aircraft 10 and a location remote from the aircraft 10.

In various examples, the controller 60 may comprise at least one processor 68 and at least one memory 70. The memory 70 stores one or more computer programs 72 comprising computer readable instructions that, when executed by the processor 68, causes performance of the methods described herein, and as illustrated in Figs. 4, 5, 6 and 7. The computer program 72 may be software or firmware, or may be a combination of software and firmware.

The processor 68 may include at least one microprocessor and may comprise a single core processor or may comprise multiple processor cores (such as a dual core processor or a quad core processor). In some examples, the processor 68 may comprise a plurality of processors (at least one of which may comprise multiple processor cores).

The memory 70 may be any suitable non-transitory computer readable storage medium, data storage device or devices, and may comprise magnetic storage (such as a hard disk drive) and/or solid-state memory (such as flash memory). The memory 70 may be permanent non-removable memory, or may be removable memory (such as a universal serial bus (USB) flash drive or a secure digital card). The memory 70 may include: local memory employed during actual execution of the computer program 72; bulk storage; and cache memories which provide temporary storage of at least some computer readable or computer usable program code to reduce the number of times code may be retrieved from bulk storage during execution of the code.

The computer program 72 may be stored on a non-transitory computer readable storage medium 74. The computer program 72 may be transferred from the non-transitory computer readable storage medium 74 to the memory 70. The non-transitory computer readable storage medium 74 may be, for example, a USB flash drive, a secure digital (SD) card, an optical disc (such as a compact disc (CD), a digital versatile disc (DVD) or a Blu-ray disc). In some examples, the computer program 72 may be transferred to the memory 70 via a signal 76 (such as a wireless signal or a wired signal).

Input/output devices may be coupled to the controller 60 either directly or through intervening input/output controllers. Various communication adaptors may also be coupled to the controller 60 to enable the apparatus 58 to become coupled to other apparatus or remote printers or storage devices through intervening private or public networks. Non-limiting examples include modems and network adaptors of such communication adaptors.

The user input device 62 may comprise any suitable device for enabling a user (for example, a person having a flight deck position in the aircrew of the aircraft 10) to at least partially control the apparatus 58. For example, the user input device 62 may comprise one or more of a keyboard, a keypad, a touchpad, a joystick, a button, a switch, and a touchscreen display. The user input device 62 may be located in the cockpit 28 of the aircraft 10, and/or may be located in the remote health monitoring facility 11. The controller 60 is configured to receive signals from the user input device 62.

The output device 64 may comprise any suitable devices for conveying information to a user. For example, the output device 64 may comprise a display (such as a liquid crystal display, or a light emitting diode display, or an active matrix organic light emitting diode display, or a thin film transistor display, or a cathode ray tube display), and/or a loudspeaker, and/or a printer (such as an inkjet printer or a laser printer). The output device 64 may be located in the cockpit 28 of the aircraft, and/or may be located in the remote health monitoring facility 11. The controller 60 is arranged to provide a signal to the output device 64 to cause the output device 64 to convey information to the user.

The sensor array 66 is configured to measure various parameters of the aircraft and generate data for those parameters. The sensor array 66 comprises a plurality of sensors (for example, a first sensor 78, a second sensor 80 and a third sensor 82 as illustrated in Fig. 3) that may be positioned at any suitable locations on the aircraft 10. For example, where the controller 60 is configured to determine foreign object damage or domestic object damage to the fan of the first propulsor 24, the plurality of sensors may be located at different locations on the first propulsor 24 to measure various parameters associated with the fan of the first propulsor 24. The controller 60 is configured to receive the data generated by the sensor array 66.

The sensor array 66 may comprise any suitable types of sensors to measure the parameters of the aircraft 10. For example, the sensor array 66 may comprise one or more cameras, one or more ultrasonic sensors, one or more light detection and ranging (LIDAR) sensors, one or more microwave sensors, one or more microphones, one or more phonic wheels (coupled to one or more shafts of a gas turbine engine for example), one or more temperature sensors (thermocouples for example), one or more pressure sensors and one or more vibration sensors.

The operation of the apparatus 58 is described in the following paragraphs with reference to Figs. 4, 5, 6 and 7.

Fig. 4 illustrates a flow diagram of a computer-implemented method for determining damage to an aircraft according to a first example.

At block 84, the method includes receiving first data from the first sensor 78, the first data comprising values for a first parameter of the aircraft 10. For example, the first sensor 78 may be a microphone located on, or near, the first propulsor 24, or on the fuselage 12, and the controller 60 may receive acoustic wave data from the first sensor 78. In this example, the values of the first data may be the amplitude of the measured acoustic wave, or may be frequency spectrum of the acoustic wave.

At block 86, the method includes receiving second data from the second sensor 80, the second data comprising values for a second parameter of the aircraft 10. For example, the second sensor 80 may be a phonic wheel located inside the first propulsor 24, and the controller 60 may receive shaft speed data from the second sensor 80. In this example, the values of the second data may be speed values of the shaft.

It should be appreciated that block 84 may occur at an earlier time than block 86. Alternatively, block 84 may occur at a later time than block 86. In other examples, blocks 84 and 86 may be concurrent.

At block 88, the method includes determining whether damage has occurred to the aircraft 10 using the values of the first data. In the example mentioned above for block 84, the controller 60 may determine whether damage has occurred to the aircraft 10 by determining whether the amplitude in the acoustic wave data has exceeded a threshold amplitude stored in the memory 70.

Where the amplitude in the acoustic wave data exceeds a threshold amplitude, the controller 60 determines that damage has occurred to the aircraft 10 and the method moves to block 90. Where the amplitude in the acoustic wave data does not exceed the threshold amplitude, the controller 60 determines that no damage has occurred to the aircraft 10 and the method returns to block 84 (that is, receiving data from the first sensor 78 and the second sensor 80).

By way of another example, the controller 60 may determine whether damage has occurred to the aircraft 10 by determining whether the frequency spectrum of the acoustic wave has one or more predetermined frequency components (for example, a low frequency component between twenty Hz and fifty Hz). Where the acoustic wave data has one or more predetermined frequency components, the controller 60 determines that damage has occurred to the aircraft 10 and the method moves to block 90. Where the acoustic wave data does not have one or more predetermined frequency components, the controller 60 determines that no damage has occurred to the aircraft 10 and the method returns to block 84.

At block 90, the method includes determining whether damage has occurred to the aircraft using the values of the second data. In the example mentioned above for block 86, the controller 60 may determine whether damage has occurred to the aircraft 10 by determining whether speed values in the shaft speed data from the phonic wheel have decreased by more than a threshold amount in a predetermined period of time.

Where the speed values in the shaft speed data have decreased by more than a threshold amount within a predetermined period of time, the controller 60 determines that damage has occurred to the aircraft 10 and the method moves to block 92. Where the speed values in the shaft speed data have not decreased by more than a threshold amount within a predetermined period of time, the controller 60 determines that no damage has occurred to the aircraft 10 and the method returns to blocks 84 and 86 (that is, receiving data from the first sensor 78 and the second sensor 80).

As described above, the controller 60 may determine whether damage has occurred to the aircraft 10 by comparing the value of a parameter with a threshold. However, it should be appreciated that in other examples, the controller 60 may determine damage using alternative methods. For example, the controller 60 may determine whether damage has occurred to the aircraft 10 using relative behaviour of engine parameters, for example, comparing fan speed with turbine power ratio (TPR), or by monitoring change in the relationship between bypass duct pressure and fan speed, or by comparing shaft speed at different locations along a shaft (where differing speeds indicate that the shaft is twisted). It should be appreciated that in these examples, block 84 and/or block 86 may include receiving further data from one or more further sensors of the sensory array 66 for the other parameter(s), and the determinations at block 88 and/or at block 90 may use the values of the further data.

In other examples, the controller 60 may determine whether damage has occurred to the aircraft 10 by providing the value of a parameter, or the relative behaviour of aircraft parameters, as an input to a trained machine learning algorithm (such as a trained neural network) whose output is a determination that damage has, or has not, occurred to the aircraft 10. Such a machine learning algorithm may be trained using a training data set obtained from a gas turbine engine rig where components having varying damage can be inserted into the rig and parameters may be measured by the sensors of the rig for the various configurations of the rig.

At block 92, the method includes controlling output of a signal comprising data indicating the occurrence of damage to the aircraft 10. For example, the controller 60 may control a transceiver to transmit the signal to the remote health monitoring facility 11 to enable the damage to the aircraft 10 to be assessed. Additionally, or alternatively, the controller 60 may control output of the signal to the output device 64 to inform the flight deck crew of the occurrence of damage. Additionally, or alternatively, the controller 60 may control output of the signal to the memory 70 to store the data 94 in the memory 70.

In some examples, the signal comprises data indicating severity of the damage. For example, at block 88, the controller 60 may determine the difference between the values of the first data and the predetermined threshold mentioned above. The controller 60 may then determine the severity of the damage using the determined difference. For example, the controller 60 may be configured to determine an increasing severity of damage with an increasing determined difference between the values of the first data and the predetermined threshold. The controller 60 may also be configured to determine the severity of the damage to the aircraft 10 using the data received from any of the sensors of the sensor array 66.

In some examples, the signal comprises data indicating a location of the damage on the aircraft 10. For example, the controller 60 may compare the positive determinations of damage at blocks 88 and 90 with a look-up table 96 stored in the memory 70 to determine a location of the damage on the aircraft 10. In another example, the controller 60 may determine a location of the damage on the aircraft 10 using a trained machine learning algorithm and by providing the positive determinations of damage at blocks 88 and 90 as inputs to the trained machine learning algorithm.

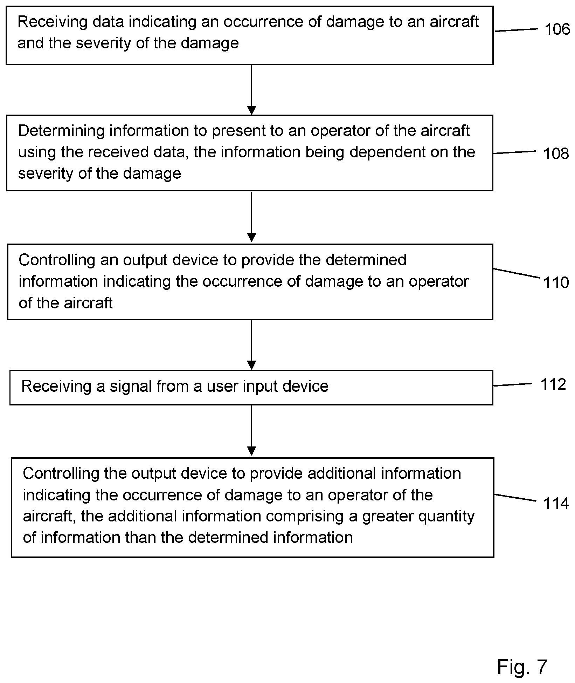

The method illustrated in Fig. 4 may advantageously reduce the likelihood of false positive determinations of damage to the aircraft 10 because the signal indicating the occurrence of damage to the aircraft 10 is output following positive determinations of damage at block 86 and at block 88. Additionally, the method illustrated in Fig. 4 may advantageously enable the severity and/or location of the damage on the aircraft 10 to be stored and/or output to a person (as discussed in greater detail with reference to Fig. 7).

It should be appreciated that while two sets of data are received (blocks 84 and 86) and two determinations are made (blocks 88 and 90) in the example described above with reference to Fig. 4, in other examples, more than two sets of data may be received from more than two sensors, and thus, more than two determinations may be made. In such examples, the method is performed in series, and each determination is made following a previous positive determination of occurrence of damage to the aircraft 10.

In some examples, if an occurrence of damage is determined only at block 88 or only at step 90, the signal output at block 92 is transmitted only to the memory 70 for storage, or to the remote health monitoring facility 11, and is not transmitted to the output device 64 of the aircraft 10. This may be advantageous in that the flight deck crew are not distracted by the damage determination, and the data is stored for later analysis. For example, the damage determination may be caused by a faulty sensor of the sensor array 66 and the stored data may be used by a maintenance crew to repair or replace the faulty sensor.

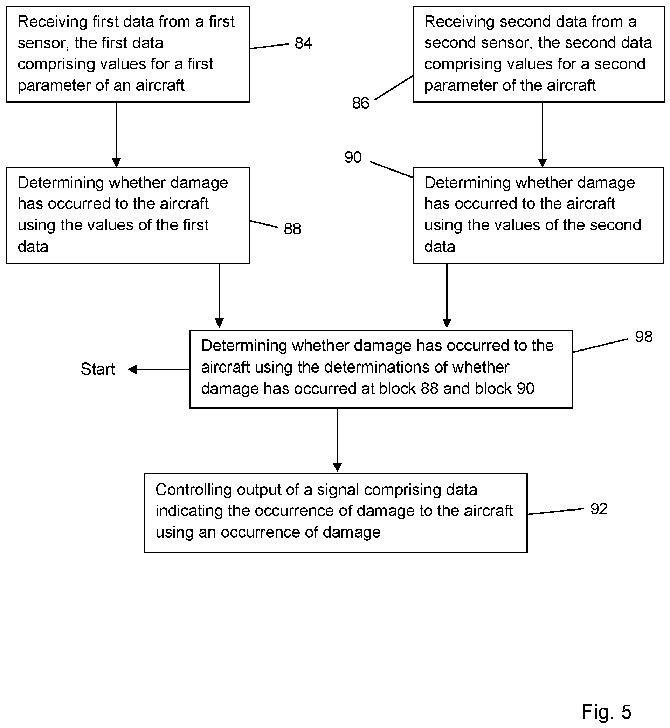

Fig. 5 illustrates a flow diagram of a computer-implemented method for determining damage to an aircraft 10 according to a second example. The method illustrated in Fig. 5 is similar to the method illustrated in Fig. 4 and where the blocks are similar, the same reference numerals are used.

In this example, blocks 84, 88 and blocks 86, 90 are performed independently of one another (that is, they are performed in parallel and may be performed concurrently or at different times) and provide separate inputs to the determination at block 98.

In more detail, at block 84, the method includes receiving first data from the first sensor 78, the first data comprising values for a first parameter of the aircraft 10. At block 88, the method includes determining whether damage has occurred to the aircraft 10 using the values of the first data. For example, the controller 60 may receive first data from the first sensor 78 and then determine whether damage has occurred to the aircraft 10 using the values of the first data and any of the processes mentioned in the preceding paragraphs (for example, comparison of the values of the first data with a predetermined threshold).

At block 86, the method includes receiving second data from the second sensor 80, the second data comprising values for a second parameter of the aircraft 10. At block 90, the method includes determining whether damage has occurred to the aircraft 10 using the values of the second data. For example, the controller 60 may receive second data from the second sensor 80 and then determine whether damage has occurred to the aircraft 10 using the values of the second data and any of the processes mentioned in the preceding paragraphs (for example, comparison of the values of the second data with a predetermined threshold).

At block 98, the method includes determining whether damage has occurred to the aircraft 10 using the determination of whether damage has occurred at block 88 and at block 90. For example, the controller 60 may determine that damage has occurred to the aircraft 10 when at least one of blocks 88 and 90 provide a positive determination of damage occurrence. In another example, the controller 60 may determine that damage has occurred to the aircraft 10 when both blocks 88 and 90 provide a positive determination of damage occurrence.

Where it is determined at block 98 that no damage has occurred to the aircraft 10, the method may return to the start where blocks 84 and 86 are repeated. Where it is determined at block 98 that damage has occurred, the method moves to block 92.

In some examples, the controller 60 may apply a different weighting to the output from block 88 to the output from block 90 when determining whether damage has occurred to the aircraft 10. For example, the weighting may be based on the level of confidence in the sensor and/or the method of determination, where low confidence sensors and/or methods of determination have a lower weighting than higher confidence sensors and/or methods of determination.

At block 92, the method includes controlling output of a signal comprising data indicating the occurrence of damage to the aircraft 10 using an occurrence of damage. As described above with reference to Fig. 4, the controller 60 may control output of the signal to the memory 70 for storage, to the remote health monitoring facility 11 for storage and/or output to a person, and/or to the output device 64 for output to the flight deck crew.

As also described above with reference to Fig. 4, the signal may comprise data indicating severity of the damage, and/or may comprise data indicating a location of the damage on the aircraft 10. Furthermore, in some examples, if an occurrence of damage is determined only at block 88 or only at step 90, but not at block 98, the signal output at block 92 may be transmitted only to the memory 70 for storage, or to the remote health monitoring facility 11, and is not transmitted to the output device 64 of the aircraft 10.

It should be appreciated that while two sets of data are received (blocks 84 and 86) and two determinations are made (blocks 88 and 90) in the example described above with reference to Fig. 5, in other examples, more than two sets of data may be received from more than two sensors, and thus, more than two determinations may be made. In such examples, block 98 has more than two inputs and the controller 60 may determine that damage has occurred to the aircraft 10 when at least two or more positive determinations of damage occurrence have been made. Additionally, it should be appreciated that block 84 and/or block 86 may include receiving further data from one or more further sensors of the sensory array 66 for other aircraft parameter(s), and the determinations at block 88 and/or at block 90 may use the values of the further data (for example, to determine whether damage has occurred to the aircraft 10 using relative behaviour of engine parameters).

The method illustrated in Fig. 5 may be advantageous in that the determination at block 98 may be tuned in dependence upon the level of confidence on the sensor and/or determinations performed at blocks 88 and 90. For example, a determination having a low level of confidence may only trigger a positive determination of damage occurrence at block 98 when one or more other determinations also outputs a positive determination of damage occurrence. By way of another example, a determination having a high level of confidence may trigger a positive determination of damage occurrence at block 98 irrespective of whether any other determinations output a positive determination of damage occurrence.

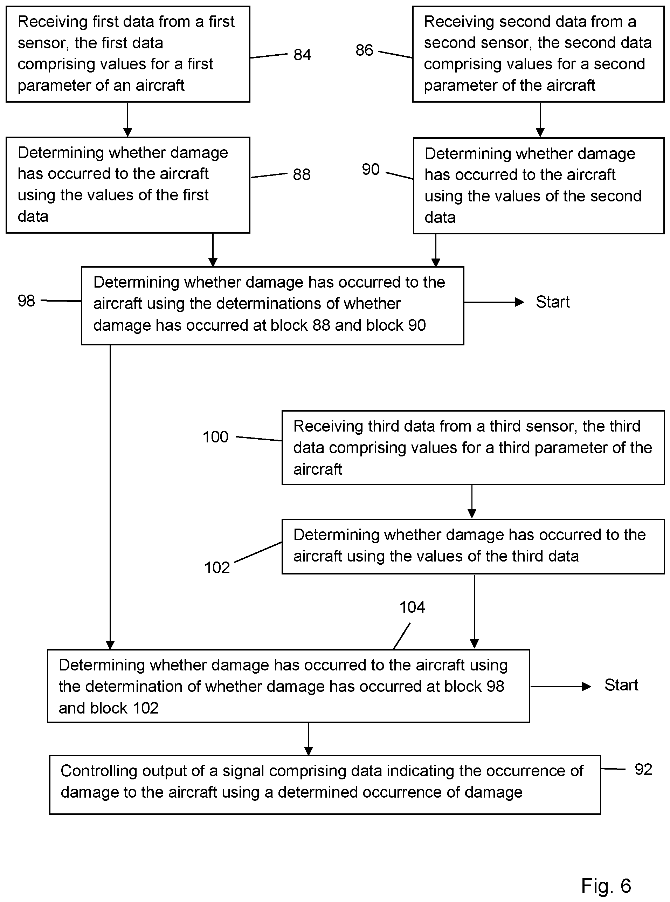

Fig. 6 illustrates a flow diagram of a computer-implemented method for determining damage to an aircraft according to a third example. The method illustrated in Fig. 6 is similar to the methods illustrated in Figs. 4 and 5 and where the blocks are similar, the same reference numerals are used.

Blocks 84, 86, 88, 90 and 98 are performed as described above with reference to Fig. 5. However, the method illustrated in Fig. 6 additionally includes blocks 100, 102, and 104 and these are described in detail in the following paragraphs.

At block 100, the method includes receiving third data from the third sensor 82, the third data comprising values for a third parameter of the aircraft 10. For example, the third sensor 82 may be a vibration sensor located on the first propulsor 24, and the controller 60 may receive vibration data from the third sensor 82. In this example, the values of the third data may be the amplitude of the measured vibrations.

At block 102, the method includes determining whether damage has occurred to the aircraft 10 using the values of the third data. In the example mentioned above for block 100, the controller 60 may determine whether damage has occurred to the aircraft 10 by determining whether the amplitude of the measured vibrations in the vibration data has exceeded a threshold amplitude stored in the memory 70. The determination at block 102 is provided as an input to block 104.

Blocks 100, 102 may be performed concurrently with blocks 84, 86, 88, 90, 98 or may be performed at a different time. For example, blocks 100, 102 may be performed prior to blocks 84, 86, 88, 90, 98 or may be performed after blocks 84, 86, 88, 90, 98. It should be appreciated that block 100 may include receiving further data from one or more further sensors of the sensory array 66 for other aircraft parameter(s), and the determination at block 102 may use the values of the further data (for example, to determine whether damage has occurred to the aircraft 10 using relative behaviour of engine parameters).

At block 104, the method includes determining whether damage has occurred to the aircraft 10 using the determination of whether damage has occurred at block 98 and block 102. For example, the controller 60 may determine that damage has occurred to the aircraft 10 when at least one of blocks 98 and 102 provide a positive determination of damage occurrence.

Where it is determined at block 104 that no damage has occurred to the aircraft 10, the method may return to the start where blocks 84, 86 and 100 are repeated. Where it is determined at block 104 that damage has occurred, the method moves to block 92.

It should be appreciated that block 104 is similar to block 98 described in the preceding paragraphs and may be performed using the same methodologies. For example, the controller 60 may apply a different weighting to the output from block 102 to the output from block 98 when determining whether damage has occurred to the aircraft 10. For example, the weighting may be based on the level of confidence in the sensor and/or the determination methodology, where low confidence sensors and/or determination methodologies have a lower weighting than higher confidence sensors and/or determination methodologies.

At block 92, the method includes controlling output of a signal comprising data indicating the occurrence of damage to the aircraft 10 using a determined occurrence of damage. As described above with reference to Fig. 5, the controller 60 may control output of the signal to the memory 70 for storage, to the remote health monitoring facility 11 for storage and/or output to a person, and/or to the output device 64 for output to the flight deck crew.

As also described above with reference to Fig. 4, the signal may comprise data indicating severity of the damage, and/or may comprise data indicating a location of the damage on the aircraft 10. Furthermore, in some examples, if an occurrence of damage is determined only at block 88, only at block 90, or only at block 102, but not at block 104, the signal output at block 104 may be transmitted only to the memory 70 for storage, or to the remote health monitoring facility 11, and is not transmitted to the output device 64 of the aircraft 10.

It should be appreciated that block 98 may have more than two inputs as described above with reference to Fig. 5. Additionally, block 104 may have more than two inputs. For example, block 104 may receive a plurality of outputs from single determinations (like blocks 100, 102), from a plurality of series of determinations (as illustrated in Fig. 4) or from a plurality of parallel determinations (like blocks 84, 86, 88, 90, 98).

The method illustrated in Fig. 6 may be advantageous in that the output from less reliable but more sensitive sensors may be analysed in a group together, and the analysis using the output from more reliable, but less sensitive sensors may be used as gate keepers to provide enhanced robustness. Additionally, the method illustrated in Fig. 6 may be implemented using multiple design assurance level (DAL) electronics. For example, more novel processor intensive determinations may be performed by lower design assurance level electronics which tend to be more powerful and have access to larger amounts of data. The simpler, more reliable determinations may be implemented on higher design assurance level electronics which tend to be less powerful.

Fig. 7 illustrates a flow diagram of a computer-implemented method for indicating an occurrence of damage to an aircraft according to various examples.

At block 106, the method includes receiving data indicating an occurrence of damage to the aircraft 10 and the severity of the damage. For example, the controller 60 may receive the data from the remote health monitoring facility 11. By way of another example, the processor 68 may receive data indicating an occurrence of damage by reading data 94 from the memory 70. By way of a further example, the controller 60 may receive the data as an output from blocks 92 illustrated in Figs. 4, 5 and 6 and described in the preceding paragraphs.

The severity of the damage may be encoded in the data as a number. For example, the severity of the damage may be any number within a predetermined range of numbers having a scale where increasing numbers represent increasing severity of damage. Alternatively, the severity of the damage may be encoded in the data quality, for example, as text that qualitatively describes the damage.

In some examples, the received data may indicate a location of the damage on the aircraft 10. For example, the received data may indicate that the gas turbine engine 32 is damaged, that a subsystem of the gas turbine engine 32 is damaged (the fan subsystem 38 for example), or that a component of the gas turbine engine 32 is damaged (a fan blade of the fan 38 for example).

At block 108, the method includes determining information to present to an operator of the aircraft 10 using the received data, the information being dependent on the severity of the damage. The determined information to be presented to the operator of the aircraft 10 may include, for example, anything from a subset of the information in the data received at block 106 to all of the information in the data received at block 106.

The determined information has a greater quantity of information when the severity of the damage is low, relative to when the severity of the damage is high. The quantity of information may be measured using any appropriate equation from information theory.

Where the severity of the damage is relatively low, the controller 60 determines detailed information (that is, a high quantity of information) to be displayed to an operator of the aircraft 10 using a display of the output device 64, to enable the operator to understand the nature of the damage in depth. Where the severity of the damage is relatively high, the controller 60 determines less detailed information (that is, a lower quantity of information) to be provided to the operator of the aircraft 10 (for example, the information may cause a red light of the output device 64 to be flashed) to enable the operator to easily understand the high degree of damage and to quickly implement mitigating actions.

In examples which are not part of the claimed invention, the controller 60 may use the severity of the damage in the received data to determine the means by which the information is conveyed to the operator, but may provide the same quantity of information for some or all degrees of severity. In other words, the information may be formatted according to its destined output device using the severity of damage, but the quantity of information (that is, the message being conveyed) is the same for some or all degrees of severity. For example, where the severity of the damage is relatively low, the controller 60 may determine information to be displayed to the operator of the aircraft 10 using a display of the output device 64. Where the severity of the damage is relatively high, the controller 60 may determine information to be provided acoustically to the operator using a loudspeaker of the output device 64 to enable the operator to better multi-task during an emergency.

In some examples, at block 108 the method may include determining the effect of the damage on the performance of the aircraft 10. For example, the controller 60 may use the severity and location of the damage encoded in the data received at block 106, and a look-up table stored in the memory 70 to determine the effect of the damage on the performance of the aircraft 10. The look-up table may, for example, store propulsor operating limits (thrust for example) and aircraft operating limits (trajectory for example) against varying severities of damage at different locations on the aircraft 10.

At block 110, the method includes controlling the output device 64 to provide the determined information indicating the occurrence of damage to an operator of the aircraft 10. For example, the controller 60 may control a display, and/or a loudspeaker, and/or a printer to provide the determined information indicating the occurrence of damage to the operator of the aircraft 10. Where the data received at block 106 indicates a location of the damage on the aircraft 10, block 110 may comprise controlling the output device 64 to provide the location of the damage. This may be provided visually via a display of the output device 64 (for example, a red dot on a picture of the aircraft 10), or may be provided aurally (for example, an acoustic message delivered by a loudspeaker).

Where damage occurs to multiple components or subsystems of the aircraft 10, the controller 60 may control the output device 64 to provide the determined information for both components/subsystems concurrently, or as concatenated information. For example, where the first propulsor 24 and the second propulsor 26 both sustain damage from bird strikes, the controller 60 may control a display of the output device 64 to display the determined information for both propulsors at the same time to enable the flight deck crew to determine which propulsor has sustained most damage. This may enable the flight deck crew to take appropriate mitigating actions (for example, shut down of the most damaged propulsor).

Block 110 may include controlling the output device 64 to provide the determined effect of the damage on the performance of the aircraft 10 to an operator of the aircraft 10. For example, the controller 60 may control a display to illustrate the maximum thrust available to the aircraft 10 and the likely trajectory of the aircraft 10 given the available thrust.

Where the operator of the aircraft 10 wishes to receive a greater quantity of information about the damage, the operator may use the user input device 62 to send a request to the controller 60. Where the operator performs such an action, the method moves to block 112 and includes receiving a signal from the user input device 62. For example, the controller 60 may receive a signal from a button or a switch of the user input device 62.

In response to receiving the user input signal at block 112, the method moves to block 114 and includes controlling the output device 64 to provide additional information indicating the occurrence of damage to an operator of the aircraft 10. The additional information comprising a greater quantity of information than the determined information. For example, where the information determined at block 108 comprises a subset of the information in the data received at block 106, the additional information may be all of the information in the data received at block 106. In another example, the additional information may comprise some or all of the information in the data received at block 106, but may not comprise the information determined at block 108.

It will be understood that the invention is not limited to the embodiments above-described and various modifications and improvements can be made without departing from the scope of the appended claims.

For example, the different embodiments may take the form of an entirely hardware embodiment, an entirely software embodiment, or an embodiment containing both hardware and software elements.

## Claims

1. A computer-implemented method comprising:
receiving data indicating an occurrence of damage to an aircraft (10) and severity of the damage;
determining information to present to an operator of the aircraft (10) using the received data, the information being dependent on the severity of the damage; and
controlling an output device (64) to provide the determined information indicating the occurrence of damage to the operator of the aircraft (10), wherein the determined information has a greater quantity of information when the severity of the damage is low, relative to when the severity of the damage is high.

2. A computer-implemented method as claimed in claim 1, wherein the data indicates a location of the damage on the aircraft, and the step of controlling the output device (64) further comprises controlling the output device (64) to provide the location of the damage.

3. A computer-implemented method as claimed in claim 1 or 2, wherein the step of determining information to present to the operator includes determining the effect of damage on performance of the aircraft (10), and the step of controlling the output device (64) further comprises controlling the output device (64) to provide the determined effect of the damage on the performance of the aircraft (10).

4. A computer-implemented method as claimed in any of the preceding claims, further comprising:
receiving a signal from a user input device (62); and
in response to receiving the signal from the user input device (62), controlling the output device (64) to provide additional information indicating the occurrence of damage to an operator of the aircraft (10), the additional information comprising a greater quantity of information than the determined information.

5. A computer-implemented method as claimed in any of the preceding claims, wherein the output device (64) comprises a display.

6. An apparatus (58) comprising:
a controller (60) configured to:
receive data indicating an occurrence of damage to an aircraft (10) and severity of the damage;
determine information to present to an operator of the aircraft (10) using the received data, the information being dependent on the severity of the damage; and
control an output device (64) to provide the determined information indicating the occurrence of damage to the aircraft (10), wherein the determined information has a greater quantity of information when the severity of the damage is low, relative to when the severity of the damage is high.

7. An apparatus (58) as claimed in claim 6, wherein the data indicates a location of the damage on the aircraft (10), and the controller (60) is configured to control the output device (64) to provide the location of the damage.

8. An apparatus as claimed in claim 6 or 7, wherein the controller (60) is configured to determine the effect of damage on performance of the aircraft (10), and to control the output device (64) to provide the determined effect of the damage on the performance of the aircraft (10).

9. An apparatus as claimed in any of claims 6 to 8, wherein the controller (60) is configured to:
receive a signal from a user input device (62); and
in response to receiving the signal from the user input device (62), control the output device (64) to provide additional information indicating the occurrence of damage to an operator of the aircraft (10), the additional information comprising a greater quantity of information than the determined information.

10. An apparatus as claimed in any of claims 6 to 9, wherein the output device (64) comprises a display.

11. A computer program (72) that, when executed by a computer, causes performance of the method as claimed in any of claims 1 to 5.

12. A non-transitory computer readable storage medium (74) comprising computer readable instructions that, when executed by a computer, cause performance of the method as claimed in any of claims 1 to 5.

## Patentansprüche

1. Computerimplementiertes Verfahren, umfassend:
Empfangen von Daten, die ein Auftreten eines Schadens an einem Luftfahrzeug (10) und die Schwere des Schadens angeben;
Bestimmen von Informationen, die einem Bediener des Luftfahrzeugs (10) zu präsentieren sind, unter Verwendung der empfangenen Daten, wobei die Informationen von der Schwere des Schadens abhängen; und
Steuern einer Ausgabevorrichtung (64) zum Bereitstellen der bestimmten Informationen, die das Auftreten eines Schadens angeben, für den Bediener des Luftfahrzeugs (10), wobei die bestimmten Informationen, wenn die Schwere des Schadens gering ist, eine größere Menge an Informationen aufweisen, relativ dazu, wenn die Schwere des Schadens groß ist.

2. Computerimplementiertes Verfahren nach Anspruch 1, wobei die Daten einen Ort des Schadens an dem Luftfahrzeug angeben und der Schritt des Steuerns der Ausgabevorrichtung (64) ferner Steuern der Ausgabevorrichtung (64) zum Bereitstellen des Orts des Schadens umfasst.

3. Computerimplementiertes Verfahren nach Anspruch 1 oder 2, wobei der Schritt des Bestimmens der dem Bediener zu präsentierenden Informationen Bestimmen der Auswirkung des Schadens auf die Leistung des Luftfahrzeugs (10) enthält und der Schritt des Steuerns der Ausgabevorrichtung (64) ferner Steuern der Ausgabevorrichtung (64) zum Bereitstellen der bestimmten Auswirkung des Schadens auf die Leistung des Luftfahrzeugs (10) umfasst.

4. Computerimplementiertes Verfahren nach einem der vorhergehenden Ansprüche, ferner umfassend:
Empfangen eines Signals von einer Benutzereingabevorrichtung (62); und
als Reaktion auf das Empfangen des Signals von der Benutzereingabevorrichtung (62), Steuern der Ausgabevorrichtung (64) zum Bereitstellen zusätzlicher Informationen, die das Auftreten eines Schadens angeben, für einen Bediener des Luftfahrzeugs (10), wobei die zusätzlichen Informationen eine größere Menge an Informationen als die bestimmten Informationen umfassen.

5. Computerimplementiertes Verfahren nach einem der vorhergehenden Ansprüche, wobei die Ausgabevorrichtung (64) eine Anzeige umfasst.

6. Einrichtung (58), umfassend:
eine Steuerung (60), die zu Folgendem konfiguriert ist:
Empfangen von Daten, die ein Auftreten eines Schadens an einem Luftfahrzeug (10) und die Schwere des Schadens angeben;
Bestimmen von Informationen, die einem Bediener des Luftfahrzeugs (10) zu präsentieren sind, unter Verwendung der empfangenen Daten, wobei die Informationen von der Schwere des Schadens abhängen; und
Steuern einer Ausgabevorrichtung (64) zum Bereitstellen der bestimmten Informationen, die das Auftreten eines Schadens an dem Luftfahrzeug (10) angeben, wobei die bestimmten Informationen, wenn die Schwere des Schadens gering ist, eine größere Menge an Informationen aufweisen, relativ dazu, wenn die Schwere des Schadens groß ist.

7. Einrichtung (58) nach Anspruch 6, wobei die Daten einen Ort des Schadens an dem Luftfahrzeug (10) angeben und die Steuerung (60) zum Steuern der Ausgabevorrichtung (64) zum Bereitstellen des Orts des Schadens konfiguriert ist.

8. Vorrichtung nach Anspruch 6 oder 7, wobei die Steuerung (60) dazu konfiguriert ist, die Auswirkung eines Schadens auf die Leistung des Luftfahrzeugs (10) zu bestimmen und die Ausgabevorrichtung (64) zum Bereitstellen der bestimmten Auswirkung des Schadens auf die Leistung des Luftfahrzeugs (10) zu steuern.

9. Einrichtung nach einem der Ansprüche 6 bis 8, wobei die Steuerung (60) zu Folgendem konfiguriert ist:
Empfangen eines Signals von einer Benutzereingabevorrichtung (62); und
als Reaktion auf das Empfangen des Signals von der Benutzereingabevorrichtung (62), Steuern der Ausgabevorrichtung (64) zum Bereitstellen zusätzlicher Informationen, die das Auftreten eines Schadens angeben, für einen Bediener des Luftfahrzeugs (10), wobei die zusätzlichen Informationen eine größere Menge an Informationen als die bestimmten Informationen umfassen.

10. Einrichtung nach einem der Ansprüche 6 bis 9, wobei die Ausgabevorrichtung (64) eine Anzeige umfasst.

11. Computerprogramm (72), das, wenn es durch einen Computer ausgeführt wird, eine Durchführung des Verfahrens nach einem der Ansprüche 1 bis 5 bewirkt.

12. Nichtflüchtiges computerlesbares Speichermedium (74), das computerlesbare Anweisungen umfasst, die, wenn sie durch einen Computer ausgeführt werden, eine Durchführung des Verfahrens nach einem der Ansprüche 1 bis 5 bewirken.

## Revendications

1. Procédé mis en oeuvre par ordinateur comprenant :
la réception de données indiquant une survenue de dommages sur un aéronef (10) et la gravité des dommages ;
la détermination d'informations à présenter à un opérateur de l'aéronef (10) à l'aide des données reçues, les informations dépendant de la gravité des dommages ; et
la commande d'un dispositif de sortie (64) pour fournir les informations déterminées indiquant le survenue de dommages
à l'opérateur de l'aéronef (10),
lesdites informations déterminées comportant une plus grande quantité d'informations lorsque la gravité des dommages est faible par rapport à lorsque la gravité des dommage est élevée.

2. Procédé mis en oeuvre par ordinateur selon la revendication 1, lesdites données indiquant un emplacement des dommages sur l'aéronef, et ladite étape de commande du dispositif de sortie (64) comprenant en outre la commande du dispositif de sortie (64) pour fournir l'emplacement des dommages.

3. Procédé mis en oeuvre par ordinateur selon la revendication 1 ou 2, ladite étape de détermination des informations à présenter à l'opérateur comprenant la détermination de l'effet des dommages sur les performances de l'aéronef (10), et ladite étape de commande du dispositif de sortie (64) comprenant en outre la commande du dispositif de sortie (64) pour fournir la conséquence déterminée des dommages sur les performances de l'aéronef (10).

4. Procédé mis en oeuvre par ordinateur selon l'une quelconque des revendications précédentes, comprenant en outre :
la réception d'un signal en provenance d'un dispositif d'entrée utilisateur (62) ; et
en réponse à la réception du signal provenant du dispositif d'entrée utilisateur (62), la commande du dispositif de sortie (64) pour fournir des informations supplémentaires indiquant la survenue de dommages à un opérateur de l'aéronef (10), les informations supplémentaires comprenant une plus grande quantité d'informations que les informations déterminées.

5. Procédé mis en oeuvre par ordinateur selon l'une quelconque des revendications précédentes, ledit dispositif de sortie (64) comprenant un dispositif d'affichage.

6. Appareil (58), comprenant :
un dispositif de commande (60) configuré pour :
recevoir des données indiquant une survenue de dommages sur un aéronef (10) et la gravité des dommages ;
déterminer des informations à présenter à un opérateur de l'aéronef (10) à l'aide des données reçues, les informations dépendant de la gravité des dommages ; et
commander un dispositif de sortie (64) pour fournir les informations déterminées indiquant la survenue de dommages à l'aéronef (10), lesdites informations déterminées comportant une plus grande quantité d'informations lorsque la gravité des dommages est faible, par rapport à lorsque la gravité des dommages est élevée.

7. Appareil (58) selon la revendication 6, lesdites données indiquant un emplacement des dommages sur l'aéronef (10), et ledit dispositif de commande (60) étant configuré pour commander le dispositif de sortie (64) afin de fournir l'emplacement des dommages.

8. Appareil selon la revendication 6 ou 7, ledit dispositif de commande (60) étant configuré pour déterminer l'effet des dommages sur les performances de l'aéronef (10), et pour commander le dispositif de sortie (64) afin de fournir la conséquence déterminée des dommages sur les performances de l'aéronef (10).

9. Appareil selon l'une quelconque des revendications 6 à 8, ledit dispositif de commande (60) étant configuré pour :
recevoir un signal en provenance d'un dispositif d'entrée utilisateur (62) ; et
en réponse à la réception du signal en provenance du dispositif d'entrée utilisateur (62), commander le dispositif de sortie (64) pour fournir des informations supplémentaires indiquant la survenue de dommages à un opérateur de l'aéronef (10), les informations supplémentaires comprenant une plus grande quantité d'informations que les informations déterminées.

10. Appareil selon l'une quelconque des revendications 6 à 9, ledit dispositif de sortie (64) comprenant un dispositif d'affichage.

11. Programme informatique (72) qui, lorsqu'il est exécuté par un ordinateur, entraîne la réalisation du procédé selon l'une quelconque des revendications 1 à 5.

12. Support de stockage non transitoire lisible par ordinateur (74) comprenant des instructions lisibles par ordinateur qui, lorsqu'elles sont exécutées par un ordinateur, entraînent la réalisation du procédé selon l'une quelconque des revendications 1 à 5.
